(19) Europäisches Patentamt
European Patent Office
Office européen des brevets

(11) EP 4 768 429 A1

(12) EUROPEAN PATENT APPLICATION

(43) Date of publication:
01.07.2026 Bulletin 2026/27

(21) Application number: 25218914.7

(22) Date of filing: 27.11.2025

(51) International Patent Classification (IPC):
C01B 25/45 (2006.01)    H01M 4/02 (2006.01)
H01M 4/58 (2010.01)    H01M 10/052 (2010.01)
H01M 10/0525 (2010.01)    H01M 4/136 (2010.01)

(52) Cooperative Patent Classification (CPC):
C01B 25/45; H01M 4/136; H01M 4/5825;
H01M 10/052; H01M 2004/028; Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 25.12.2024 JP 2024228178

(71) Applicant: Toyota Jidosha Kabushiki Kaisha
Toyota-shi, Aichi-ken 471-8571 (JP)

(72) Inventors:
• KAWAI, Hiroki
Toyota-shi, Aichi-ken,, 471-8571 (JP)
• YOKOE, Kenji
Toyota-shi, Aichi-ken,, 471-8571 (JP)

(74) Representative: Winter, Brandl - Partnerschaft
mbB
Alois-Steinecker-Straße 22
85354 Freising (DE)

(54) POSITIVE ELECTRODE ACTIVE MATERIAL, ELECTRODE, AND BATTERY

(57) A positive electrode active material includes olivine lithium manganese iron phosphate, wherein the olivine lithium manganese iron phosphate contains a first dopant at the phosphorus site and a second dopant at the manganese-iron site, and satisfies relationships of $\Delta G^3 < \Delta G^1 + \Delta G^2$, $\Delta G^2 < 0$ kJ/mol, and $\Delta G^3 < 0$ kJ/mol where $\Delta G^1$ represents free energy of formation produced by substitution of phosphorus at the phosphorus site with the first dopant, $\Delta G^2$ represents free energy of formation produced by substitution of iron at the manganese-iron site with the second dopant, and $\Delta G^3$ represents free energy of formation produced by substitution of phosphorus at the phosphorus site with the first dopant and substitution of iron at the manganese-iron site with the second dopant.

FIG. 6

**Description**

BACKGROUND OF THE INVENTION

1. Field of the Invention

The present disclosure relates to a positive electrode active material, an electrode, and a battery.

2. Description of Related Art

Japanese Unexamined Patent Application Publication No. 2023-039365 (JP2023-039365A) discloses a positive electrode active material represented by $LiMn_zM2_bFe_{1-z-b}PO_4$ (M2 is at least one selected from the group consisting of Ni, Co, Ti, Cu, Zn, Mg, Zr, Ca, Y, Mo, Ba, Pb, Bi, La, Ce, Nd, Gd, Al, Ga, and Sr).

SUMMARY OF THE INVENTION

The improvement of the performance of olivine lithium manganese iron phosphate (LMFP) has been attempted by introducing various dopants into LMFP. However, the dopant cannot stably exist in the crystalline structure, and disadvantages such as the precipitation of the dopant and different phase formation may occur during cycle operation.

The present disclosure provides a positive electrode active material that enhances the stability of the dopant in LMFP, an electrode, and a battery.

Hereinafter, the technical constitution and the operation and effect of the present disclosure will be described. However, the operation mechanism includes presumptions. The operation mechanism does not limit the technical scope of the present disclosure.

The positive electrode active material according to the first aspect of the present disclosure includes olivine lithium manganese iron phosphate, wherein the olivine lithium manganese iron phosphate contains a first dopant at a phosphorus site and a second dopant at a manganese-iron site, and satisfies relationships of $\Delta G^3 < \Delta G^1 + \Delta G^2$, $\Delta G^2 < 0$ kJ/mol, and $\Delta G^3 < 0$ kJ/mol, wherein $\Delta G^1$ represents free energy of formation produced by substitution of phosphorus at the phosphorus site with the first dopant, $\Delta G^2$ represents free energy of formation produced by substitution of iron at the manganese-iron site with the second dopant, and $\Delta G^3$ represents free energy of formation produced by substitution of phosphorus at the phosphorus site with the first dopant and substitution of iron at the manganese-iron site with the second dopant.

Hereinafter, respective free energies of formation are also referred to as the first free energy of formation "$\Delta G^1$", the second free energy of formation "$\Delta G^2$", and the third free energy of formation "$\Delta G^3$".

The improvement of each performance is expected with the introduction of the first dopant into the P site. However, the introduction of the first dopant tends to increase the free energy of a compound particularly in a Li-poor state of charge. The first free energy of formation produced by the introduction of the first dopant "$\Delta G^1$" may have a positive value. Since a positive free energy change makes the first dopant at the P site instable, the decomposition of the positive electrode active material and the like are considered to occur, for example, after cycle operation.

The introduction of the second dopant to the MnFe site (hereinafter, also referred to as the "M site") may cause a negative free energy change. In other words, the second free energy of formation produced by the introduction of the second dopant "$\Delta G^2$" may have a negative value.

Usually, the third free energy of formation "$\Delta G^3$" produced when both the first dopant and the second dopant are introduced is considered to be the sum of "$\Delta G^1$" and "$\Delta G^2$". However, according to a new finding of the present disclosure, the third free energy of formation "$\Delta G^3$" may be smaller than "$\Delta G^1 + \Delta G^2$". When the relationship of "$\Delta G^3 < \Delta G^1 + \Delta G^2$" is satisfied, a significant improvement of the stability of the first dopant is expected.

In the positive electrode active material in the above aspect, a relationship of $\Delta G^3 \leq -272$ kJ/mol may be further satisfied.

When the relationship of "$\Delta G^3 \leq -272$ kJ/mol" is satisfied, the improvement of the stability of the first dopant is expected.

In the positive electrode active material in the above aspect, a relationship of $\Delta G^3 \leq -457$ kJ/mol may be further satisfied.

When the relationship of "$\Delta G^3 \leq -457$ kJ/mol" is satisfied, the improvement of the stability of the first dopant is expected.

In the positive electrode active material in the above aspect, a relationship of $\Delta G^3 - (\Delta G^1 + \Delta G^2) \leq -107$ kJ/mol may be further satisfied.

When the difference between "$\Delta G^3$" and "$(\Delta G^1 + \Delta G^2)$" is a negative value, the higher the absolute value of the difference is, the higher the effect of improving the stability of the first dopant due to the combination of the first dopant and the second dopant is expected to be.

In the positive electrode active material in the above aspect, the first dopant may contain silicon.

LMFP includes a Mn plateau derived from the redox reaction of Mn and an Fe plateau derived from the redox reaction of Fe. Since the voltage difference between the Mn plateau and the Fe plateau (hereinafter, also referred to as the "voltage difference between plateaus") is large, the resistance may rapidly increase during operation. When Si is introduced into the P site, the Fe plateau may increase. Si is in an electron-poor state at the P site and thus reduces the spin-pairing energy of Fe, so that the Fe plateau is considered to increase. The increase of the Fe plateau may reduce the voltage difference between plateaus "$\Delta V$". The reduction in the voltage difference between plateaus "$\Delta V$" may mitigate a rapid increase in the resistance during operation.

In the positive electrode active material in the above aspect, the second dopant may have a valence of +3, +4, or +5 and a coordination number of 6 at the manganese-iron site.

Mn and Fe have a valence of +2 or +3 at the M site. Mn and Fe are in the six-coordination state with respect to oxygen (O) at the M site. When the second dopant has a coordination number of 6 at the M site, the second dopant is also in the six-coordination state with respect to O. That is, the second dopant is equivalent to Mn and Fe. Further, when the second dopant has a valence of +3, +4, or +5 at the M site, the second dopant is considered to be in an electron-rich state. Since the second dopant forms a stable oxide and is in an electron-rich state at the M site, the stability of the first dopant that is in an electron-poor state at the P site is considered to be improved.

In the positive electrode active material in the above aspect, the second dopant may contain at least one selected from the group consisting of aluminum, scandium, titanium, vanadium, yttrium, zirconium, niobium, lanthanum, hafnium, tantalum, and cerium.

In the positive electrode active material in the above aspect, the second dopant may be at least one selected from the group consisting of titanium, zirconium, and hafnium.

In the positive electrode active material in the above aspect, the olivine lithium manganese iron phosphate may have a composition represented by the general formula: $Li_{1+a}[(Mn_xFe_{1-x})_{1-y}X^2_y][P_{1-z}X^1_z]O_4$, wherein $X^1$ represents the first dopant, $X^2$ represents the second dopant, and relationships of $-0.5 \leq a \leq 0.5$, $0.1 \leq x \leq 0.9$, $0.001 \leq y \leq 0.3$, and $0.001 \leq z \leq 0.3$ are satisfied.

The site occupancy of the first dopant "$X^1$" may be, for example, 0.1% to 30%. The site occupancy of the second dopant "$X^2$" may be, for example, 0.1% to 30%.

In the positive electrode active material in the above aspect, relationships of $0.5 \leq x \leq 0.9$, $0.005 \leq y \leq 0.2$, and $0.005 \leq z \leq 0.2$ may be satisfied in the general formula.

The electrode according to the second aspect of the present disclosure includes a positive electrode layer, wherein the positive electrode layer contains the positive electrode active material according to the above aspect.

The positive electrode layer may be referred to as "a positive electrode active material layer", "a positive electrode composite layer", and the like. The "electrode" may be "a monopolar electrode (positive electrode)" or "a bipolar electrode", as long as the electrode includes the positive electrode layer.

The battery according to the third aspect of the present disclosure includes the electrode according to the above aspect.

The battery according to the above aspect may have a bipolar structure.

The bipolar structure may be formed by laminating bipolar electrodes. The bipolar structure is expected to improve, for example, output characteristics. In addition, since cells are connected in series in the bipolar structure, the influence of the voltage difference between plateaus may increase.

Hereinafter, an embodiment of the present disclosure (hereinafter, optionally abbreviated as "the present embodiment"), and an example of the present disclosure (hereinafter, optionally abbreviated as "the present example") will be described. However, the present embodiment and the present example do not limit the technical scope of the present disclosure. The present embodiment and the present example are exemplary only in all respects. The present embodiment and the present example are non-limiting. The technical scope of the present disclosure encompasses all modifications within the meanings and scope equivalent to the description of claims. For example, it is also anticipated from the beginning that any structures may be extracted from the present embodiment and are arbitrarily combined.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a graph of an example of the fitting results;
FIG. 2 is a graph illustrating the discharge curve and the resistance change in the present embodiment;
FIG. 3 is a schematic perspective view of the battery in the present embodiment;
FIG. 4 is a schematic cross-sectional view along the line IV-IV in FIG. 3;

FIG. 5 is the first diagram illustrating the experimental results; and
FIG. 6 is the second diagram illustrating the experimental results.

DETAILED DESCRIPTION OF EMBODIMENTS

Terms, Phrases

The terms "comprise", "include", "have", and variations thereof are open-ended expressions. The structure represented by an open-ended expression may further include or may not include additional elements in addition to essential elements. The description "consist of" is a closed-ended expression. However, even a structure represented by a closed-ended expression may include additional elements that are usually accompanying impurities or irrelevant to the target technique. The description of "substantially consist of ..." is a semi-closed-ended expression. In the structure represented by a semi-closed-ended expression, addition of the elements that substantially do not affect basic and novel characteristics of the target technique is acceptable.

The expressions such as "may" and "can" do not mean "must" that signifies requisiteness, and are used as "be likely to" that signifies acceptability.

The expressions such as "first" and "second" are used to distinguish a plurality of elements with each other. The above expressions are not intended to limit the corresponding elements, in any sense. The above expressions are regardless of, for example, an order or an importance of the corresponding elements.

Geometric terms should not be interpreted in a strict sense. Examples of geometric terms include "parallel", "perpendicular", and "orthogonal". For example, the direction, angle, and distance may be relatively displaced, within a range capable of obtaining substantially the same or similar functions. Geometric terms may include, for example, a tolerance and an error in design, work, and manufacture. The dimensional relationships in each drawing sometimes do not correspond to actual dimensional relationships. To help the understanding of the readers, the dimensional relationships in each drawing are sometimes changed. For example, the length, width, thickness, and the like are changed in some cases. Some structures are omitted in some cases.

An element described by "a singular form" may include a plural form, unless otherwise specified. For example, a particle may refer to a plurality of particles, an aggregation of particles, and a powder and granular material, in some cases. Note that, "a plurality of particles" may be referred to as "a particle group".

Unless otherwise specified, a numerical range such as "m to n%" includes an upper limit value and a lower limit value. That is, the term "m to n%" refers to a numerical range of "m% or more and n% or less". The term "m% or more and n% or less" includes "more than m% and less than n%". The terms "or more" and "or less" are represented by a less-than-or-equal-to sign and a greater-than-or-equal-to sign "$\leq, \geq$". The terms "more than" and "less than" are represented by a less-than sign and a greater-than sign "$<, >$". A numerical value arbitrarily selected from the numerical range may be determined as a new upper limit value or lower limit value. For example, a new numerical range may be set by arbitrarily combining a numerical value in the numerical range with a numerical value described in another part, table, drawing, or the like in the present specification.

All numerical values are modified by the term "about". The term "about" may mean, for example, $\pm 5\%$, $\pm 3\%$, or $\pm 1\%$. All numerical values may be appropriate values that may be changed depending on the mode of use of the target technique. All numerical values may be expressed in significant figures. A measured value may be an average value in measurement performed multiple times, unless otherwise specified. The number of times of measurement may be three times or more, five times or more, or 10 times or more. In general, the larger the number of times of measurement is, the more the reliability of the average value is expected to be improved. The measured value may be rounded off to the nearest unit based on the number of digits of the significant figure. The measured value may include, for example, an error due to the detection limit of the measurement apparatus.

The apparatus, software, and the like used in the measurement of various values and the like are merely examples. An apparatus equivalent to the exemplified apparatus or the like may be used. When an equivalent is used, measurement conditions may be regulated according to the equivalent.

The term "D50" refers to a particle size at a cumulative value of 50% in a volume-based particle size distribution (cumulative distribution). The volume-based particle size distribution is measured by a laser diffraction particle size distribution analyzer.

The term "maximum Feret diameter" refers to the length of the long side of the minimum bounding rectangle (MBR) of a particle in a scanning electron microscope (SEM) image or transmission electron microscope (TEM) image of the particle. Note that, various dimension measurements and shape analyses in the SEM image and the like may be conducted by using, for example, image analysis software "ImageJ".

The chemical composition of a compound may be measured by inductively coupled plasma atomic emission spectroscopy (ICP-AES). A sample solution is prepared by dissolving 0.1 g of a sample (e.g., a positive electrode active material) in mixed acid of hydrochloric acid and sulfuric acid (10 ml). The sample solution is diluted to an appropriate concentration using a volumetric flask. After dilution, composition analysis is conducted using an ICP-AES apparatus. For example, the product name "PS3520UVDDII (manufactured by Hitachi High-Tech Science Corporation)" may be used. When composition analysis is conducted by recovering the positive electrode active material from the battery or the like, the positive electrode active material is recovered from the battery in a state of full discharge. Further, the composition analysis is conducted on the positive electrode active material in a state of full discharge.

A stoichiometric composition formula represents a representative example of a compound. The compound may have a non-stoichiometric composition. For example, "$Al_2O_3$" is not limited to the compound having an amount-of-substance ratio (molar ratio) of "$Al/O = 2/3$". "$Al_2O_3$" represents a compound that contains Al and O at any amount-of-substance ratio, unless otherwise specified. For example, the compound may be doped with a trace amount of elements. Some A1 and O may be substituted with another element.

The crystalline structure of an object is specified by an X-ray diffraction (XRD) pattern. The XRD pattern is obtained by powder XRD measurement. For example, the conditions of the powder XRD measurement are as follows.

Analysis method: wide-angle method
Measurement apparatus: SmartLabII (manufactured by Rigaku Corporation)
Measurement angle: 10° to 120°
Tube: CuK$\alpha$
Tube voltage: 45 kV
Tube current: 200 mA
Measurement mode: continuous mode
Step: 0.02
IS: 1/2
Speed: 2°/min
RS: 20 mm
Detection mode: one-dimensional

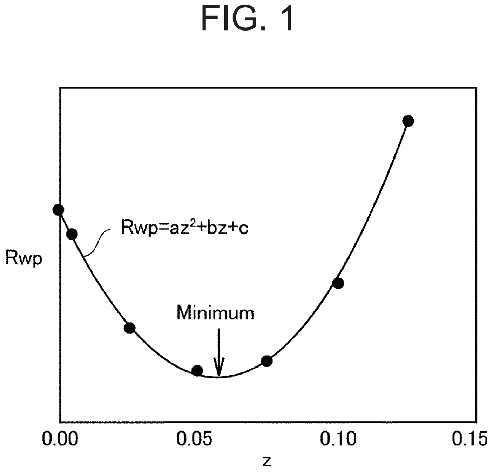

The site to which each dopant is introduced and the site occupancy of each dopant are specified by the Rietveld refinement of the XRD pattern. The algorithm of the Rietveld refinement is as follows. The XRD pattern is subjected to background treatment and structure refinement using software "GSAS-II". The structure model is the space group Pnma. A variable is set to the composition of "z". At this time, setting is generally conducted in the range of "$0 \leq z \leq 0.3$". Thereafter, when lattice constant refinement is conducted by determining a target site (M site, P site) as "X", "Rwp" that is one of refinement indices, is calculated. A quadratic function "$Rwp = az^2 + bz + c$" is fitted to the values of "Rwp" and "z". FIG. 1 is a graph of an example of the fitting results. In the obtained approximate curve, "z" at which "Rwp" is minimum is considered as the composition ratio of the dopant at the target site. The percentage of "z" is considered as the site occupancy of the dopant.

The first free energy of formation "$\Delta G^1$", the second free energy of formation "$\Delta G^2$", and the third free energy of formation "$\Delta G^3$" are calculated according to the following equations.

$\Delta G^1 = [\{E_{total} (MnFePO_4 \text{ doped with } X^1) + E_{total} (P \text{ simple substance})\} - \{E_{total} (MnFePO_4) + E_{total} (X^1 \text{ simple substance})\}]/(\text{amount-of-substance of } X^1)$

$\Delta G^2 = [\{E_{total} (MnFePO_4 \text{ doped with } X^2) + E_{total} (Fe \text{ simple substance})\} - \{E_{total} (MnFePO_4) + E_{total} (X^2 \text{ simple substance})\}]/(\text{amount-of-substance of } X^2)$

$\Delta G^3 = [\{E_{total} (MnFePO_4 \text{ doped with } X^1 \text{ and } X^2) + E_{total} (P \text{ simple substance}) + E_{total} (Fe \text{ simple substance})\} - \{E_{total} (MnFePO_4) + E_{total} (X^1 \text{ simple substance}) + E_{total} (X^2 \text{ simple substance})\}]/(\text{total amount-of-substance of } X^1 \text{ and } X^2)$

The term "$E_{total} (A)$" represents the total energy of a substance A. "$E_{total} (A)$" is obtained from the first-principles calculation based on the density functional method. Alternatively, "$E_{total} (A)$" may be a value obtained with respect to a structure optimized by a machine learning potential that has learned data of the first-principles calculation.

The term "derivative" refers to a compound in which a part of the compound as a matrix is modified by at least one selected from the group consisting of the introduction of a functional group, the substitution of an atom, oxidation, reduction, and other chemical reactions. The site of modification may be one or a plurality of sites. For example, the term "substituent" may include at least one selected from the group consisting of an alkyl group, an alkenyl group, an alkynyl group, a cycloalkyl group, an unsaturated cycloalkyl group, an aromatic group, a heterocyclic ring group, a halogen atom (such as F, Cl, Br, or I), an OH group, an SH group, a CN group, an SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthio group, a sulfonyl group, a sulfinyl group, a ureide group, an amide phosphate group, a sulfo group, a carboxy group, a hydroxamic acid group, a sulfino group, a hydrazino group, an imino group, and a silyl group. These substituents may be further substituted. When there are two or more substituents, the substituents may be the same or different from one another. A plurality of substituents may be bonded to one another to form a ring.

Positive Electrode Active Material

The positive electrode active material contains olivine lithium manganese iron phosphate (LMFP). LMFP has a crystal structure that belongs to the space group Pnma. LMFP contains a Li site, a M site (MnFe site), a P site, and an O site. The dopants are introduced into both the P site and the M site. LMFP contains the first dopant "$X^1$" at the P site and the second dopant "$X^2$" at the M site. The relationships of "$\Delta G^2 < 0$ kJ/mol", "$\Delta G^3 < 0$ kJ/mol", and "$\Delta G^3 < \Delta G^1 + \Delta G^2$" are satisfied due to co-doping of the first dopant "$X^1$" and the second dopant "$X^2$". When the above relationships are satisfied, the stability of the first dopant "$X^1$" is expected to be improved.

The third free energy of formation "$\Delta G^3$" is a negative value. The smaller the third free energy of formation "$\Delta G^3$" is, the more the stability of the first dopant "$X^1$" is expected to be improved. The third free energy of formation "$\Delta G^3$" may be, for example, -272 kJ/mol or less, -307 kJ/mol or less, -420 kJ/mol or less, -422 kJ/mol or less, -457 kJ/mol or less, -482 kJ/mol or less, -483 kJ/mol or less, -531 kJ/mol or less, -560 kJ/mol or less, -608 kJ/mol or less, or -650 kJ/mol or less. That is, for example, a relationship of "$\Delta G^3 \leq -272$ kJ/mol" or "$\Delta G^3 \leq -457$ kJ/mol" may be satisfied. The third free energy of formation "$\Delta G^3$" may be, for example, -650 kJ/mol or more, -608 kJ/mol or more, -560 kJ/mol or more, -531 kJ/mol or more, -483 kJ/mol or more, -482 kJ/mol or more, -457 kJ/mol or more, -422 kJ/mol or more, -420 kJ/mol or more, -307 kJ/mol or more, or -272 kJ/mol or more.

The second free energy of formation "$\Delta G^2$" is a negative value. The second free energy of formation "$\Delta G^2$" may be, for example, -214 kJ/mol or less, -254 kJ/mol or less, -274 kJ/mol or less, -378 kJ/mol or less, -396 kJ/mol or less, -397 kJ/mol or less, -440 kJ/mol or less, -465 kJ/mol or less, -483 kJ/mol or less, -530 kJ/mol or less, or -569 kJ/mol or less. The second free energy of formation "$\Delta G^2$" may be, for example, -569 kJ/mol or more, -530 kJ/mol or more, -483 kJ/mol or more, -465 kJ/mol or more, -440 kJ/mol or more, -397 kJ/mol or more, -396 kJ/mol or more, -378 kJ/mol or more, -274 kJ/mol or more, or -254 kJ/mol or more.

The first free energy of formation "$\Delta G^1$" may be, for example, a positive value. When the first free energy of formation "$\Delta G^1$" is a positive value, for example, a reduction in the voltage difference between plateaus "$\Delta V$" is expected. The first free energy of formation "$\Delta G^1$" may be, for example, 10 kJ/mol or more, 20 kJ/mol or more, 30 kJ/mol or more, 40 kJ/mol or more, 50 kJ/mol or more, 60 kJ/mol or more, 70 kJ/mol or more, 80 kJ/mol or more, 90 kJ/mol or more, or 100 kJ/mol or more. The first free energy of formation "$\Delta G^1$" may be, for example, 300 kJ/mol or less, 200 kJ/mol or less, 150 kJ/mol or less, 120 kJ/mol or less, 100 kJ/mol or less, 90 kJ/mol or less, 80 kJ/mol or less, 70 kJ/mol or less, 60 kJ/mol or less, 50 kJ/mol or less, 40 kJ/mol or less, 30 kJ/mol or less, 20 kJ/mol or less, or 10 kJ/mol or less.

When the difference "$\Delta G^3 - (\Delta G^1 + \Delta G^2)$" is a negative value, the higher the absolute value of the difference is, the larger the effect of improving the stability of the dopant is expected to be. The difference "$\Delta G^3 - (\Delta G^1 + \Delta G^2)$" may be, for example, -107 kJ/mol or less, -108 kJ/mol or less, -113 kJ/mol or less, -167 kJ/mol or less, -168 kJ/mol or less, -171 kJ/mol or less, -176 kJ/mol or less, -183 kJ/mol or less, -238 kJ/mol or less, or -243 kJ/mol or less. That is, for example, a relationship of "$\Delta G^3 - (\Delta G^1 + \Delta G^2) \leq -107$ kJ/mol" may be satisfied. The difference "$\Delta G^3 - (\Delta G^1 + \Delta G^2)$" may be, for example, -243 kJ/mol or more, -238 kJ/mol or more, -183 kJ/mol or more, -176 kJ/mol or more, -171 kJ/mol or more, -168 kJ/mol or more, -167 kJ/mol or more, -113 kJ/mol or more, -108 kJ/mol or more, or -107 kJ/mol or more.

For example, a relationship of "$\Delta G^3 < \Delta G^2$" may be satisfied. The higher the absolute value of the difference "$\Delta G^3 - \Delta G^2$" is, the more the stability of the dopant is expected to be improved. The difference "$\Delta G^3 - \Delta G^2$" may be, for example, -17 kJ/mol or less, -18 kJ/mol or less, -23 kJ/mol or less, -77 kJ/mol or less, -78 kJ/mol or less, -81 kJ/mol or less, -86 kJ/mol or less, -93 kJ/mol or less, -148 kJ/mol or less, or -153 kJ/mol or less. The difference "$\Delta G^3 - \Delta G^2$" may be, for example, -153 kJ/mol or more, -148 kJ/mol or more, -93 kJ/mol or more, -86 kJ/mol or more, -81 kJ/mol or more, -78 kJ/mol or more, -77 kJ/mol or more, -23 kJ/mol or more, -18 kJ/mol or more, or -17 kJ/mol or more.

The first dopant "$X^1$" may be an element that results in an improvement of each performance of LMFP. As long as the first free energy of formation "$\Delta G^1$", the second free energy of formation "$\Delta G^2$", and the third free energy of formation "$\Delta G^3$" satisfy the above relationships, the first dopant "$X^1$" may contain an arbitrary element. The first dopant "$X^1$" substitutes P at the P site. The first dopant "$X^1$" may have, for example, a valence of +4 and a coordination number of 4 at the P site. That is, the first dopant "$X^1$" is in a coordination state equivalent to P and in an electron-poor state, at the P site.

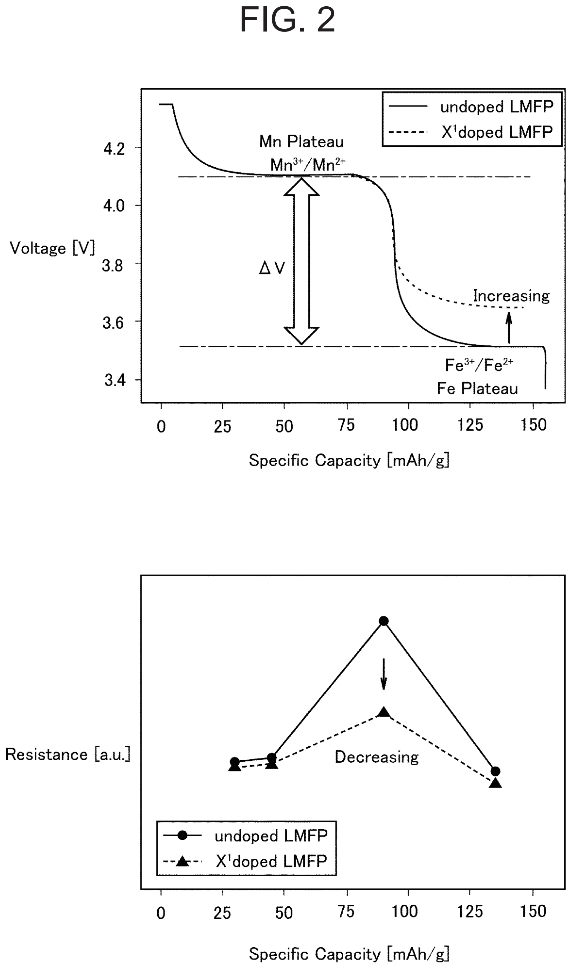

The first dopant "$X^1$" may contain, for example, Si. Si may have a valence of +4 and a coordination number of 4 at the P site. The first dopant "$X^1$" may be, for example, Si. When the first dopant "$X^1$" contains Si, a reduction in the voltage difference between plateaus "$\Delta V$" is expected. FIG. 2 is a graph illustrating the discharge curve and the resistance change in the present embodiment. In FIG. 2, the upper graph is the discharge curve of LMFP. The discharge curve of LMFP includes a Mn plateau and an Fe plateau. The Mn plateau is derived from the redox reaction of Mn ($Mn^{2+}/Mn^{3+}$). The Mn plateau has a plateau voltage of 4.10+0.05 V. The Fe plateau is derived from the redox reaction of Fe ($Fe^{2+}/Fe^{3+}$). The Fe plateau has a plateau voltage lower than the plateau voltage of the Mn plateau. Usually, the voltage difference between plateaus "$\Delta V$" is about 0.60 V.

The term "specific capacity" refers to the capacity per unit mass of the active material. The specific capacity of LMFP may be, for example, 140 mAh/g or more, 145 mAh/g or more, or 150 mAh/g or more. The specific capacity of LMFP may be, for example, 160 mAh/g or less or 155 mAh/g or less.

The lower graph of FIG. 2 is the resistance change accompanied by discharge. The resistance rapidly increases in the boundary division of the Mn plateau and the Fe plateau during discharge. That is, the resistance change has a spiky peak. The spiky peak of the resistance is considered to occur due to a large voltage difference between plateaus "$\Delta V$". When Si is introduced into the P site, the voltage difference between plateaus "$\Delta V$" may be reduced. Si that is in an electron-poor state at the P site reduces the spin-pairing energy of Fe, so that the voltage of the Fe plateau is considered to increase.

For example, when the voltage difference between plateaus "$\Delta V$" is reduced to 0.56 V or less, the spiky peak may be mitigated. The smaller the voltage difference between plateaus "$\Delta V$" is, the more the spiky peak is expected to be mitigated. The voltage difference between plateaus "$\Delta V$" may be, for example, 0.55 V or less, 0.54 V or less, 0.53 V or less, 0.52 V or less, 0.51 V or less, 0.50 V or less, 0.49 V or less, 0.48 V or less, 0.47 V or less, or 0.46 V or less. The voltage difference between plateaus "$\Delta V$" may be, for example, 0.45 V or more, 0.46 V or more, 0.47 V or more, 0.48 V or more, 0.49 V or more, 0.50 V or more, 0.51 V or more, 0.52 V or more, 0.53 V or more, 0.54 V or more, or 0.55 V or more.

For example, when the co-doping of the first dopant "$X^1$" and the second dopant "$X^2$" increases the stability of the first dopant "$X^1$", an increase in the effect of reducing the voltage difference between plateaus "$\Delta V$" is expected.

The discharge curve of LMFP is measured by arbitrary evaluation cells. The following is an example of a cell configuration.

Positive electrode: positive electrode active material, conductive material, binder

Negative electrode: Li metal
Electrolyte: solute "$LiPF_6$ (1 M)", solvent "EC/DMC = 3/7 (volume ratio)"

In the evaluation cell, for example, a discharge curve is obtained under the following conditions.

Charge and discharge system: constant current (CC) system
Charge rate: 0.05 C
Discharge rate: 0.05 C
Upper limit voltage: 4.25 V
Lower limit voltage: 3.00 V

"C" is a symbol representing the current rate. In the rate of " 1 C", a rated capacity of a battery is flowed over 1 hour.

The discharge curve is illustrated in a graph in which the abscissa indicates the specific capacity (unit: mAh/g) and the ordinate indicates the voltage (unit: V). The term "plateau" represents a region having a flat discharge curve. That is, a region where the tilt of the discharge curve is 0.005 V/(mAh/g) or less is considered to be a plateau. The term "plateau voltage" represents the voltage at the intermediate position in the abscissa, among voltages in the plateau. The difference between the plateau voltage of the Mn plateau and the plateau voltage of the Fe plateau is the voltage difference between plateaus "$\Delta V$".

The second dopant "$X^2$" substitutes Fe. The second dopant "$X^2$" may have an action of enhancing the stability of the first dopant "$X^1$" at the P site. The second dopant "$X^2$" may form a stable oxide at the M site. The second dopant "$X^2$" may be in an electron-rich state at the M site. The second dopant "$X^2$" may have, for example, a valence of +3, +4, or +5 and a coordination number of 6 at the M site. The second dopant "$X^2$" may have a coordination state equivalent to Mn and Fe at the M site. That is, the second dopant "$X^2$" may be in the six-coordination state with respect to oxygen.

The second dopant "$X^2$" may be, for example, at least one selected from the group consisting of Al(+3), Sc(+3), Ti(+3), V(+5), Y(+3), Zr(+4), Nb(+5), La(+3), Hf(+4), Ta(+5), and Ce(+3). The numerical value in () represents the valence in the M site (six-coordination state). The second dopant "$X^2$" may be, for example, at least one selected from the group consisting of Ti, Zr, and Hf.

In addition to the second dopant "$X^2$", a third dopant "$X^3$" may be introduced into the M site. The third dopant "$X^3$" may be a substitutional dopant or an interstitial dopant. In the case of the substitutional dopant, the third dopant "$X^3$" may substitute Fe or Mn. The third dopant "$X^3$" may have, for example, an action of enhancing the action of the first dopant "$X^1$" (e.g., an effect of reducing the voltage difference between plateaus). The third dopant "$X^3$" may contain, for example, at least one selected from the group consisting of beryllium (Be), magnesium (Mg), cobalt (Co), nickel (Ni), copper (Cu), zinc (Zn), and germanium (Ge).

LMFP may have, for example, a composition represented by the general formula (1) " $Li_{1+a}[(Mn_xFe_{1-x})_{1-y}X^2_y][P_{1-z}X^1_z]O_4$ ".

In the general formula (1), for the Li composition ratio "1 + a", for example, the relationship of "-0.5 ≤ a ≤ 0.5" may be satisfied. "a" may be, for example, -0.4 or more, -0.3 or more, -0.2 or more, -0.1 or more, 0 or more, 0.1 or more, 0.2 or more, 0.3 or more, or 0.4 or more. "a" may be, for example, 0.4 or less, 0.3 or less, 0.2 or less, 0.1 or less, 0 or less, -0.1 or less, -0.2 or less, -0.3 or less, or -0.4 or less.

In the general formula (1), $[P_{1-z}X^1_z]$ represents the P site. "$X^1$" represents the first dopant. With respect to the composition ratio "z", for example, a relationship of "0.001 ≤ z ≤ 0.3" may be satisfied. The composition ratio "z" may be, for example, 0.001 or more, 0.002 or more, 0.005 or more, 0.01 or more, 0.02 or more, 0.03 or more, 0.04 or more, 0.05 or more, 0.06 or more, 0.07 or more, 0.08 or more, 0.09 or more, 0.10 or more, 0.12 or more, 0.15 or more, 0.20 or more, or 0.25 or more. The composition ratio "z" may be, for example, 0.25 or less, 0.20 or less, 0.15 or less, 0.12 or less, 0.10 or less, 0.09 or less, 0.08 or less, 0.07 or less, 0.06 or less, 0.05 or less, 0.04 or less, 0.03 or less, 0.02 or less, 0.01 or less, 0.005 or less, or 0.002 or less. With respect to the composition ratio "z", for example, a relationship of "0.005 ≤ z ≤ 0.2" may be satisfied.

In the general formula (1), $[(Mn_xFe_{1-x})_{1-y}X^2_y]$ represents the M site. With respect to the composition ratio "x", for example, a relationship of "0.1 ≤ x ≤ 0.9" may be satisfied. The composition ratio "x" may be, for example, 0.2 or more, 0.3 or more, 0.4 or more, 0.5 or more, 0.6 or more, 0.7 or more, or 0.8 or more. The composition ratio "x" may be, for example, 0.8 or less, 0.7 or less, 0.6 or less, 0.5 or less, 0.4 or less, 0.3 or less, or 0.2 or less. With respect to the composition ratio "x", for example, a relationship of "0.5 ≤ x ≤ 0.9" may be satisfied. Due to the composition ratio "x", a balance between the specific capacity corresponding to the Mn plateau and the specific capacity corresponding to the Fe plateau may be adjusted. For example, the larger the composition ratio "x" is, the more the Mn plateau tends to be enlarged and the more the Fe plateau tends to be shrunk. The specific capacity of LMFP tends to be increased due to the enlargement of the Mn plateau.

In the general formula (1), "$X^2$" represents the second dopant. With respect to the composition ratio "y", for example, a relationship of "0.001 ≤ y ≤ 0.3" may be satisfied. The composition ratio "y" may be, for example, 0.001 or more, 0.002 or more, 0.005 or more, 0.01 or more, 0.02 or more, 0.03 or more, 0.04 or more, 0.05 or more, 0.06 or more, 0.07 or more, 0.08 or more, 0.09 or more, 0.10 or more, 0.12 or more, 0.15 or more, 0.20 or more, or 0.25 or more. The composition ratio "y" may be, for example, 0.25 or less, 0.20 or less, 0.15 or less, 0.12 or less, 0.10 or less, 0.09 or less, 0.08 or less, 0.07 or less, 0.06 or less, 0.05 or less, 0.04 or less, 0.03 or less, 0.02 or less, 0.01 or less, 0.005 or less, or 0.002 or less. With respect to the composition ratio "y", for example, a relationship of "0.005 ≤ y ≤ 0.2" may be satisfied.

For example, LMFP may have a composition represented by the general formula (2) "$Li_{1+a}[(Mn_xFe_{1-x})_{1-y}(X^2_{1-w}X^3_w)_y][P_{1-z}X^1_z]O_4$ ".

In the general formula (2), "$X^3$" represents the third dopant. With respect to the composition ratio "w", for example, a relationship of "0 ≤ w < 1" may be satisfied. The composition ratio "w" may be, for example, 0.01 or more, 0.02 or more, 0.03 or more, 0.04 or more, 0.05 or more, 0.06 or more, 0.07 or more, 0.08 or more, 0.09 or more, 0.1 or more, 0.2 or more, 0.3 or more, 0.4 or more, 0.5 or more, 0.6 or more, 0.7 or more, 0.8 or more, or 0.9 or more. The composition ratio "w" may be, for example, 0.9 or less, 0.8 or less, 0.7 or less, 0.6 or less, 0.5 or less, 0.4 or less, 0.3 or less, 0.2 or less, 0.1 or less, 0.09 or less, 0.08 or less, 0.07 or less, 0.06 or less, 0.05 or less, 0.04 or less, 0.03 or less, 0.02 or less, or 0.01 or less. In the general formula (2), the elements other than the composition ratio "w" are the same as the elements in the general formula (1).

For example, LMFP may have a composition represented by the general formula (3) "$Li_{1+a}[Mn_xFe_{1-x-y}X^2_y][P_{1-z}X^1_z]O_4$ ". In the general formula (3), the second dopant "$X^2$" substitutes only Fe. Other elements are the same as the elements in the general formula (1).

For example, LMFP may have a composition represented by the general formula (4) "$Li_{1+a}[(Mn_xFe_{1-x-y}X^2_y)_{1-w}X^3_w][P_{1-z}X^1_z]O_4$ ". In the general formula (4), the second dopant "$X^2$" substitutes only Fe. Other elements are the same as the elements in the general formula (2).

LMFP may have, for example, a powder form. D50 of LMFP may be, for example, 5 μm or more, 10 μm or more, 15 μm or more, or 20 μm or more. D50 of LMFP may be, for example, 30 μm or less, 25 μm or less, 20 μm or less, 15 μm or less, or 10 μm or less.

LMFP may form secondary particles. A secondary particle is an aggregate of primary particles. The term "primary particle" refers to particles having apparently no grain boundaries on a two-dimensional image. The two-dimensional image may be, for example, a TEM image or an SEM image. The magnification of the image may be, for example, 10000 times to 30000 times. The secondary particle may have any shape. The secondary particle may be, for example, spherical, rodlike, or angular. When the secondary particle is spherical, for example, the improvement of packability is expected. The sphericity of the secondary particle may be, for example, 0.85 or more, 0.90 or more, or 0.95 or more. The sphericity of the secondary particle may be, for example, 1 or less, 0.95 or less, or 0.90 or less. The term "sphericity" refers to circularity in the SEM image. The sphericity (circularity) is determined by the following equation. As the value of sphericity, an arithmetic mean of 30 secondary particles is adopted.

$\psi = 4 \pi S/L^2$

$\psi$: Sphericity (circularity)

$\pi$: Circumference ratio

S: Cross-sectional area of a particle (the area of the region surrounded by the outline of the particle)

L: Circumference of a particle (the length of the outline of the particle)

The primary particle may have any shape. The primary particle may be, for example, spherical, rodlike, or angular. The primary particle may be a nanoparticle. The maximum Feret diameter of the primary particle may be, for example, 10 nm to 300 nm. The maximum Feret diameter of the primary particle may be, for example, 15 nm or more, 20 nm or more, 25 nm or more, 50 nm or more, 75 nm or more, 100 nm or more, 150 nm or more, 200 nm or more, or 250 nm or more. The maximum Feret diameter of the primary particle may be, for example, 250 nm or less, 200 nm or less, 150 nm or less, 100 nm or less, 75 nm or less, 50 nm or less, or 25 nm or less. As the maximum Feret diameter of the primary particle, an arithmetic mean of 30 primary particles is adopted.

The surface of the primary particle may be coated with carbon. That is, a carbon layer or a carbon coating may be formed on the surface of the primary particle. A part of the surface of the primary particle or the entire surface of the primary particle may be coated with carbon. Carbon may be derived from a saccharide or the like. The amount of carbon attached may be, for example, 0.1% or more, 0.5% or more, 1% or more, 2% or more, 3% or more, or 4% or more by the mass fraction with respect to the secondary particle. The amount of carbon attached may be, for example, 5% or less, 4% or less, or 3% or less by the mass fraction with respect to the secondary particle.

The positive electrode active material may further contain other components, as long as containing LMFP. The mixing ratio of LMFP to other components (mass ratio) may be, for example, "LMFP/other components = 9/1 to 1/9", "LMFP/other components = 8/2 to 2/8", "LMFP/other components = 7/3 to 3/7", or "LMFP/other components = 6/4 to 4/6". The positive electrode active material may be, for example, a mixture of the powder of LMFP and the powder of other components. Other components may include, for example, at least one selected from the group consisting of Li[NiCoMn] $O_2$ (layered structure), Li[NiCoAl]$O_2$ (layered structure), LiMnO$_2$ (rock-salt structure), and Li[NiMn]$_2$O$_4$ (spinel structure). Note that the description such as [NiCoMn] represents that the sum of the composition ratio in [] is one. As long as the sum is one, components in [] may have any composition ratio.

The positive electrode active material (powder) may be a mixture of a large particle and a small particle. LMFP may be a mixture of a large particle and a small particle. LMFP may be a large particle, and other components may be small particles. LMFP may be a small particle, and other components may be large particles. The ratio of D50 of the large particle to D50 of the small particle may be, for example, 1.2 or more, 1.5 or more, 2 or more, 3 or more, 4 or more, or 5 or more. The ratio of D50 of the large particle to D50 of the small particle may be, for example, 10 or less, 8 or less, 6 or less, 4 or less, or 2 or less.

Liquid battery

In some present embodiments, the battery may be a liquid battery. The term "liquid battery" refers to a battery including an electrolyte. For example, since a polymer battery includes an electrolyte, the polymer battery belongs to the liquid battery. In some present embodiments, the battery has a monopolar structure. In the monopolar structure, a power generation element may be a wound type or a laminated type. In some present embodiments, the battery has a bipolar structure. As an example, a battery (bipolar battery) having a bipolar structure will be described.

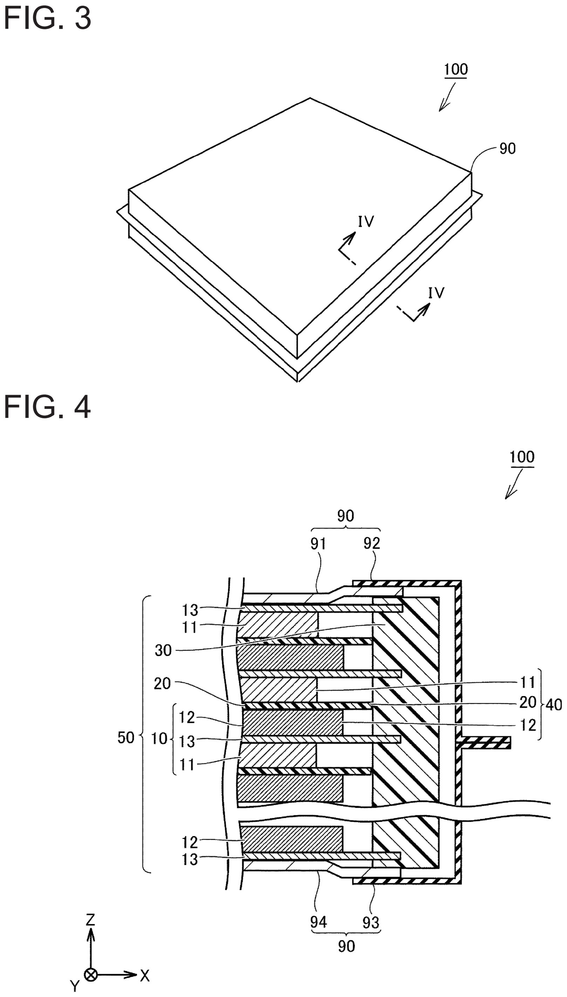

FIG. 3 is a schematic perspective view of the battery in the present embodiment. FIG. 4 is a schematic cross-sectional view along the line IV-IV in FIG. 3. Hereinafter, the term "perpendicular direction" refers to the normal direction to the surface of a sheet member (e.g., a foil or an electrode). The term "in-plane direction" refers to any direction orthogonally intersects the perpendicular direction. In the drawing of the present embodiment, the Z axis direction corresponds to the perpendicular direction. Each of the X axis direction and the Y axis direction is an example of the in-plane direction.

A battery 100 includes an outer packaging 90 and a power generation element 50. The outer packaging 90 stores the power generation element 50. The outer packaging 90 may include, for example, a first current-collector plate 91, a first laminate film 92, a second laminate film 93, and a second current-collector plate 94. The first laminate film 92 and the second laminate film 93 are joined with each other at an end part in the in-plane direction. At the joint part of the first laminate film 92 and the second laminate film 93, a sealing material (not shown) may be interposed between the first laminate film 92 and the second laminate film 93.

The first current-collector plate 91 and the second current-collector plate 94 are joined to the power generation element 50 at the end part in the lamination direction (the Z axis direction). The first laminate film 92 is joined to the first current-collector plate 91. The second laminate film 93 is joined to the second current-collector plate 94. At the joint part of the current-collector plate and the laminate film, a sealing material (not shown) may be interposed between the current-collector plate and the laminate film.

The power generation element 50 includes a plurality of bipolar electrodes 10. The plurality of bipolar electrodes 10 is laminated in the perpendicular direction (the Z axis direction). Each of the bipolar electrodes 10 includes a positive electrode layer 11, a collector foil 13, and a negative electrode layer 12 in the perpendicular direction in the order presented. In the in-plane direction (e.g., the X axis direction), the collector foil 13 is extended to the outside as compared with the positive electrode layer 11 and the negative electrode layer 12. For example, the collector foil 13 may be extended to the outside as compared with the positive electrode layer 11 and the negative electrode layer 12 over the whole circumference in the in-plane direction.

The collector foil 13 is a conductor. The collector foil 13 may contain, for example, a metal foil or a conductive resin layer. For example, the collector foil 13 may be formed by sticking an Al foil and a Cu foil together. A carbon material may be applied to the surface of the collector foil 13. The carbon material may contain, for example, carbon black.

The power generation element 50 includes a sealing material 30. The sealing material 30 is joined to the collector foil 13 at the end part in the in-plane direction. The sealing material 30 may be heat-welded to, for example, the collector foil 13. For example, the sealing material 30 may be arranged over the whole circumference in the in-plane direction. The sealing material 30 may contain, for example, a resin material. The sealing material 30 seals the space between the collector foils 13 adjacent to each other in the perpendicular direction. The sealing material 30 seals the space between the collector foils 13, so that cells 40 are divided. The cell 40 is the minimum unit of the power generation element 50. Since the battery 100 includes a plurality of cells 40, the cell 40 may also be referred to as "a bipolar module". Each of the cells 40 is sealed. Each of the cells 40 is isolated from one another. Each of the cells 40 includes the positive electrode layer 11, a separator 20, the negative electrode layer 12, and an electrolyte.

Positive Electrode Layer

The positive electrode layer 11 is attached to a surface of the collector foil 13. For example, a groove may be formed on the positive electrode layer 11. The positive electrode layer 11 may be formed, for example, in a stripe form. The positive electrode layer 11 contains a positive electrode active material. That is, the battery 100 contains the positive electrode active material. The details of the positive electrode active material are as described above.

The positive electrode layer 11 may further contain, for example, a conductive material and a binder, in addition to the positive electrode active material. The amount of the conductive material formulated may be, for example, 0.1 parts to 10 parts by mass based on 100 parts by mass of the positive electrode active material. The conductive material may contain any component. The conductive material may contain, for example, at least one selected from the group consisting of graphite, acetylene black (AB), ketjen black (Registered Trademark), vapor grown carbon fiber (VGCF), carbon nanotube (CNT), and graphene flake (GF).

The amount of the binder formulated may be, for example, 0.1 parts to 10 parts by mass based on 100 parts by mass of the positive electrode active material. The binder may contain any component. The binder may contain, for example, at least one selected from the group consisting of polyvinylidene fluoride (PVdF), a vinylidene fluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinylpyrrolidone (PVP), polyoxyethylene alkyl ether, and derivatives thereof.

The positive electrode layer 11 may contain, for example, an inorganic filler, an organic filler, a solid electrolyte, a surface modifier, a dispersant, a lubricant, a flame retardant, a protective agent, a flux, a coupling agent, or an adsorbent. The positive electrode layer may contain, for example, polyoxyethylene allyl phenyl ether phosphate, zeolite, a silane coupling agent, $MoS_2$, or $WO_3$.

Negative Electrode Layer

The negative electrode layer 12 is attached to a surface of the collector foil 13. The negative electrode layer 12 is arranged on the back of the positive electrode layer 11. The negative electrode layer 12 may have a larger area than the area of the positive electrode layer 11. The negative electrode layer 12 contains a negative electrode active material.

The negative electrode active material may be, for example, in a particle form or a sheet form. D50 of the negative electrode active material may be, for example, 1 $\mu$m or more, 5 $\mu$m or more, or 10 $\mu$m or more. D50 of the negative electrode active material may be, for example, 30 $\mu$m or less, 20 $\mu$m or less, 15 $\mu$m or less, or 10 $\mu$m or less.

The negative electrode active material may contain any component. The negative electrode active material may contain, for example, at least one selected from the group consisting of a carbon-based active material, an alloy-based active material, a Si-C composite material, a Li metal, a Li base alloy, and lithium titanate. In some present embodiments, the battery may be a Li metal negative electrode battery.

The carbon active material may contain, for example, at least one selected from the group consisting of graphite, soft carbon, and hard carbon. The term "graphite" is a generic term for natural graphite and artificial graphite. Graphite may be a mixture of natural graphite and artificial graphite. The mixing ratio (mass ratio) may be, for example, "natural graphite/artificial graphite = 1/9 to 9/1", "natural graphite/artificial graphite = 2/8 to 8/2" or "natural graphite/artificial graphite = 3/7 to 7/3".

The surface of graphite may be coated with, for example, amorphous carbon. The surface of graphite may be coated with, for example, a different material. The different material may contain, for example, at least one selected from the group consisting of P, W, Al, and O. The different material may contain, for example, at least one selected from the group consisting of $Al(OH)_3$, $AlOOH$, $Al_2O_3$, $WO_3$, $Li_2CO_3$, $LiHCO_3$, and $Li_3PO_4$.

The alloy-based active material may contain, for example, at least one selected from the group consisting of Si, Li silicate, SiO, a Si base alloy, tin (Sn), SnO, and a Sn base alloy.

For example, SiO may have a composition represented by the general formula "$SiO_x$". In the general formula, for example, the relationship of "$0 < x < 2$", "$0.5 \leq x \leq 1.5$" or "$0.8 \leq x \leq 1.2$" may be satisfied.

The term "Si-C composite material" refers to a composite material of a carbon-based active material (such as graphite) and an alloy-based active material (such as Si). For example, Si fine particles may be dispersed in carbon particles. For example, Si fine particles may be dispersed in graphite particles. For example, Li silicate particles may be coated with a carbon material (such as amorphous carbon).

Separator

The separator 20 may separate the positive electrode layer 11 from the negative electrode layer 12. The separator 20 has electrical insulating properties. The separator 20 may include, for example, at least one selected from the group consisting of a resin film (polymer film), an inorganic particle layer, and an organic particle layer. The separator 20 may include, for example, a resin film and an inorganic particle layer.

The resin film is porous. The resin film may include, for example, a microporous film and non-woven fabric. The resin film contains a resin backbone. The resin backbone may be, for example, continuously present in a mesh form. Pores are formed in the gaps of the resin backbone. The resin film allows the electrolyte to be transmitted. The resin film may have, for example, an average pore diameter of 1 $\mu$m or less. The average pore diameter of the resin film may be, for example, 0.01 $\mu$m to 1 $\mu$m or 0.1 $\mu$m to 0.5 $\mu$m. The "average pore diameter" may be measured by mercury porosimetry. The Gurley value of the resin film may be, for example, 50 s/100 cm$^3$ to 250 s/100 cm$^3$. The "Gurley value" may be measured by the Gurley method.

The resin film may contain, for example, at least one selected from the group consisting of an olefin-based resin, a polyurethane-based resin, a polyamide-based resin, a cellulose-based resin, a polyether-based resin, an acrylic resin, and a polyester-based resin. The resin film may contain, for example, at least one selected from the group consisting of polyethylene (PE), polypropylene (PP), polyamide (PA), polyamideimide (PAI), polyimide (PI), aromatic polyamide (aramid), polyphenylene ether (PPE), and derivatives thereof. The resin film may be formed by, for example, a drawing method or a phase separation method. The thickness of the resin film may be, for example, 5 $\mu$m to 50 $\mu$m or 10 $\mu$m to 25 $\mu$m.

The resin film may have, for example, a single layer structure. The resin film may be formed of, for example, a PE layer. The backbone of the PE layer is formed of PE. The PE layer may have a shutdown function. The resin film may have, for example, a multilayer structure. The resin film may include, for example, a PP layer and a PE layer. The backbone of the PP layer is formed of PP. The resin film may have, for example, a three-layer structure. For example, the resin film may be formed by laminating the PP layer, the PE layer, and the PP layer in the order presented. The thickness of the PE layer may be, for example, 5 $\mu$m to 20 $\mu$m. The thickness of the PP layer may be, for example, 3 $\mu$m to 10 $\mu$m.

The inorganic particle layer may be formed on the surface of the resin film. The inorganic particle layer may be formed only on a surface or on both surfaces of the resin film. The inorganic particle layer may be formed on a surface facing the positive electrode layer 11 or a surface facing the negative electrode layer 12. Note that, the inorganic particle layer may be formed on the surface of the positive electrode layer 11 or the surface of the negative electrode layer 12.

The inorganic particle layer is porous. The inorganic particle layer contains inorganic particles. The inorganic particle may also be referred to as an "inorganic filler". Pores are formed in the gaps between inorganic particles. The thickness of the inorganic particle layer may be, for example, 0.5 $\mu$m to 10 $\mu$m or 1 $\mu$m to 5 $\mu$m. The inorganic particle may contain, for example, a heat-resistant material. The inorganic particle layer containing the heat-resistant material may also be referred to as a "heat resistance layer (HRL)". The inorganic particle may contain at least one selected from the group consisting of boehmite, alumina, zirconia, titania, magnesia, and silica. The inorganic particle may have any shape. The inorganic particle may be, for example, spherical, rodlike, platy, or fibrous. D50 of the inorganic particle may be, for example, 0.1 $\mu$m to 10 $\mu$m or 0.5 $\mu$m to 3 $\mu$m. The inorganic particle layer may further contain a binder. The binder may contain, for example, at least one selected from the group consisting of an acrylic resin, a polyamide-based resin, a fluorine-based resin, an aromatic polyether-based resin, and a liquid crystal polyester-based resin.

The separator 20 may include, for example, an organic particle layer. For example, the separator 20 may include the organic particle layer instead of the resin film. For example, the separator 20 may include the organic particle layer instead of the inorganic particle layer. The separator 20 may include both the resin film and the organic particle layer. The separator 20 may include both the inorganic particle layer and the organic particle layer. The separator 20 may include the resin film, the inorganic particle layer, and the organic particle layer.

The thickness of the organic particle layer may be, for example, 0.1 μm to 50 μm, 0.5 μm to 20 μm, 0.5 μm to 10 μm, or 1 μm to 5 μm. The organic particle layer contains organic particles. The organic particle may also be referred to as an "organic filler". The organic particle may contain a heat-resistant material. The organic particle may contain, for example, at least one selected from the group consisting of PE, PP, PTFE, PI, PAI, PA, and aramid. The organic particle may be, for example, spherical, rodlike, platy, or fibrous. D50 of the organic particle may be, for example, 0.1 μm to 10 μm or 0.5 μm to 3 μm.

The separator 20 may include, for example, a mix layer. The mix layer contains both the inorganic particle and the organic particle.

Electrolyte

The electrolyte is a liquid electrolyte. The electrolyte contains a solute and a solvent. The concentration of the solute may be, for example, 0.5 mol/L to 1 mol/L, 1 mol/L to 1.5 mol/L, 1.5 mol/L to 2 mol/L, 2 mol/L to 2.5 mol/L, or 2.5 mol/L to 3 mol/L. The term "mol/L" may sometimes be described as "M". The solute contains a supporting salt (Li salt). The solute may include, for example, an inorganic acid salt, an imide salt, an oxalate complex, and a halide. The solute may include, for example, at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr and derivatives thereof.

The electrolyte may contain, for example, a carbonate-based solvent (carbonic ester-based solvent). The solvent may contain, for example, cyclic carbonate, chain carbonate, and fluorinated carbonate. The solvent may contain, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may contain cyclic carbonate (such as EC, PC, or FEC) and chain carbonate (such as EMC, DMC, or DEC). The mixing ratio (volume ratio) of cyclic carbonate to chain carbonate may be, for example, "cyclic carbonate/chain carbonate = 1/9 to 4/6", "cyclic carbonate/chain carbonate = 2/8 to 3/7", or "cyclic carbonate/chain carbonate = 3/7 to 4/6".

The solvent may contain cyclic carbonate (such as EC or PC) and fluorinated cyclic carbonate (such as FEC). The mixing ratio (volume ratio) of cyclic carbonate to fluorinated cyclic carbonate may be, for example, "cyclic carbonate/-fluorinated cyclic carbonate = 99/1 to 90/10", "cyclic carbonate/fluorinated cyclic carbonate = 9/1 to 1/9", "cyclic carbonate/fluorinated cyclic carbonate = 9/1 to 7/3" or "cyclic carbonate/fluorinated cyclic carbonate = 3/7 to 1/9".

The solvent may contain, for example, EC, FEC, EMC, DMC, and DEC. The volume ratio of each component may satisfy, for example, the relationship represented by the relational equation "$V_{EC} + V_{FEC} + V_{EMC} + V_{DMC} + V_{DEC} = 10$". In the relational equation, "$V_{EC}$, $V_{FEC}$, $V_{EMC}$, $V_{DMC}$, and $V_{DEC}$" represent the volume ratio of EC, FEC, EMC, DMC, and DEC, respectively. The relationships of "$1 \leq V_{EC} \leq 4$", "$0 \leq V_{FEC} \leq 3$", "$V_{EC} + V_{FEC} \leq 4$", "$0 \leq V_{EMC} \leq 9$", "$0 \leq V_{DMC} \leq 9$", "$0 \leq V_{DEC} \leq 9$", and "$6 \leq V_{EMC} + V_{DMC} + V_{DEC} \leq 9$" are satisfied. For example, the relationship of "$1 \leq V_{EC} \leq 2$" or "$2 \leq V_{EC} \leq 3$" may be satisfied. For example, the relationship of "$1 \leq V_{FEC} \leq 2$" or "$2 \leq V_{FEC} \leq 4$" may be satisfied. For example, the relationship of "$3 \leq V_{EMC} \leq 4$" or "$6 \leq V_{EMC} \leq 8$" may be satisfied. For example, the relationship of "$3 \leq V_{DMC} \leq 4$" or "$6 \leq V_{DMC} \leq 8$" may be satisfied. For example, the relationship of "$3 \leq V_{DEC} \leq 4$" or "$6 \leq V_{DEC} \leq 8$" may be satisfied.

The solvent may have a composition of, for example, "EC/EMC = 3/7", "EC/DMC = 3/7", "EC/FEC/DEC = 1/2/7", "EC/DMC/EMC = 3/4/3", "EC/DMC/EMC = 3/3/4", "EC/FEC/DMC/EMC = 2/1/4/3", "EC/FEC/DMC/EMC = 1/2/4/3", "EC/FEC/DMC/EMC = 2/1/3/4", or "EC/FEC/DMC/EMC = 1/2/3/4", in the volume ratio.

The electrolyte may contain an ether-based solvent. The electrolyte may contain, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolyte may contain any additive. The amount of addition (mass fraction with respect to the whole electrolyte) may be, for example, 0.01% to 5%, 0.05% to 3%, or 0.1% to 1%. The additive may include, for example, a solid electrolyte interphase (SEI) formation promoter, an SEI formation inhibitor, a gas generating agent, an overcharging inhibitor, a flame retardant, an antioxidant, an electrode protective agent, and a surfactant.

The additive may contain, for example, at least one selected from the group consisting of vinylene carbonate (VC), vinyl ethylene carbonate (VEC), 1,3-propanesultone (PS), tert-amylbenzene, 1,4-di-tert-butylbenzene, biphenyl (BP), cyclohexylbenzene (CHB), ethylene sulfite (ES), ethylene sulfate (DTD), γ-butyrolactone, a phosphazene compound, carboxylate ester [e.g., methyl formate (MF), methyl acetate (MA), methyl propionate (MP), or diethyl malonate (DEM)], fluorobenzene [e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, and hexafluorobenzene), fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, and octafluorotoluene), benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, and 4-methylbenzotrifluoride), fluoroxylene (e.g., 3-fluoro-o-xylene, 4-fluoro-o-xylene, 2-fluoro-m-xylene, and 5-fluoro-m-xylene), a sulfur-containing heterocyclic compound (e.g., benzothiazole, 2-methylbenzothiazole, and tetrathiafulvalene), a nitrile compound (e.g., adiponitrile and succinonitrile), phosphate ester (e.g., trimethyl phosphate and triethyl phosphate), carboxylic anhydride (e.g., acetic anhydride, propionic anhydride, oxalic anhydride, succinic anhydride, maleic anhydride, phthalic anhydride, and benzoic anhydride), alcohol (e.g., methanol, ethanol, n-propyl alcohol, ethylene glycol, and diethylene glycol monomethyl ether), and derivatives thereof.

The components described above as the solute and the solvent may be used as trace components (additives). The additive may contain, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives thereof.

The electrolyte may contain an ionic liquid. The ionic liquid may contain, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives thereof.

In some present embodiments, the battery may include a gel electrolyte. That is, the battery may be a polymer battery. The gel electrolyte may contain an electrolyte and a polymer material. The polymer material may form a polymer matrix. The polymer material may contain, for example, at least one selected from the group consisting of PVdF, PVdF-HFP, polyacrylonitrile (PAN), PVdF-PAN, polyethylene oxide (PEO), polyethylene glycol (PEG), and derivatives thereof.

Solid-state Battery

In some present embodiments, the battery may be a solid-state battery. The solid-state battery may have a bipolar structure. The solid-state battery includes a solid electrolyte instead of the electrolyte and the separator 20. The solid electrolyte may be included in the positive electrode layer 11 and the negative electrode layer 12. Instead of the separator 20, a solid electrolyte layer separates the negative electrode layer 12 from the positive electrode layer 11. For example, the solid electrolyte layer contains the solid electrolyte and the binder.

For example, the solid electrolyte may be powder. D50 of the solid electrolyte may be, for example, 0.1 $\mu$m or more, 0.2 $\mu$m or more, 0.3 $\mu$m or more, 0.4 $\mu$m or more, 0.5 $\mu$m or more, 0.6 $\mu$m or more, 0.7 $\mu$m or more, 0.8 $\mu$m or more, 0.9 $\mu$m or more, or 1 $\mu$m or more. D50 of the solid electrolyte may be, for example, 5 $\mu$m or less, 4 $\mu$m or less, 3 $\mu$m or less, 2 $\mu$m or less, or 1 $\mu$m or less.

The solid electrolyte may contain, for example, at least one selected from the group consisting of a sulfide solid electrolyte, a halide solid electrolyte, an oxide solid electrolyte, a hydride solid electrolyte, and a nitride solid electrolyte.

The sulfide solid electrolyte may contain at least one selected from the group consisting of an amorphous phase, a crystalline phase, and a glass-ceramic (crystallized glass) phase. The crystalline phase may be, for example, argyrodite or LGPS. The sulfide solid electrolyte contains Li and sulfur (S). The sulfide solid electrolyte may further contain any component in addition to Li and S.

The sulfide solid electrolyte may contain, for example, at least one selected from the group consisting of LiI-LiBr-$Li_3PS_4$, $Li_2S$-$SiS_2$, LiI-$Li_2S$-$SiS_2$, LiI-$Li_2S$-$P_2S_5$, LiI-$Li_2O$-$Li_2S$-$P_2S_5$, LiI-$Li_2S$-$P_2O_5$, LiI-$Li_3PO_4$-$P_2S_5$, $Li_2S$-$GeS_2$-$P_2S_5$, $Li_2S$-$P_2S_5$, $Li_{10}GeP_2S_{12}$, $Li_4P_2S_6$, $Li_7P_3S_{11}$, $Li_3PS_4$, and $Li_7PS_6$.

For example, "LiI-LiBr-$Li_3PS_4$" represents a sulfide solid electrolyte produced by mixing LiI, LiBr, and $Li_3PS_4$ at any amount-of-substance ratio. For example, the sulfide solid electrolyte may be produced by a mechanochemical method. The mixing ratio may be specified by adding a number in front of each raw material. For example, "10LiI-15LiBr-75$Li_3PS_4$" indicates that the mixing ratio is "LiI/LiBr/$Li_3PS_4$ = 10/15/75 (amount-of-substance ratio)".

For example, the sulfide solid electrolyte may have a composition represented by the general formula "$xLi_2S$-(1-x)$P_2S_5$". In the general formula, "x" may be, for example, more than 0, 0.1 or more, 0.2 or more, 0.25 or more, 0.3 or more, 0.4 or more, 0.5 or more, 0.6 or more, 0.7 or more, 0.75 or more, 0.8 or more, or 0.9 or more. "x" may be, for example, 1 or less, 0.9 or less, 0.8 or less, 0.7 or less, 0.75 or less, 0.6 or less, 0.5 or less, 0.4 or less, 0.3 or less, 0.2 or less, or 0.1 or less. For example, when "x = 0.75", "$xLi_2S$-(1-x)$P_2S_5$" may have a composition of $Li_3PS_4$.

For example, the sulfide solid electrolyte may have a composition represented by the general formula "yLiI-zLiBr-(100-y-z)[$xLi_2S$-(1-x)$P_2S_5$]". In the general formula, "x" may be, for example, 0.5 or more, 0.6 or more, 0.7 or more, 0.75 or more, 0.8 or more, or 0.9 or more. "x" may be, for example, 1 or less, 0.9 or less, 0.8 or less, 0.75 or less, 0.7 or less, or 0.6 or less. "y" may be, for example, 0 or more, 5 or more, 10 or more, 15 or more, 20 or more, or 25 or more. "y" may be, for example, 30 or less, 25 or less, 20 or less, 15 or less, 10 or less, or 5 or less. "z" may be, for example, 0 or more, 5 or more, 10 or more, 15 or more, 20 or more, or 25 or more. "z" may be, for example, 30 or less, 25 or less, 20 or less, 15 or less, 10 or less, or 5 or less.

For example, the sulfide solid electrolyte may have a composition represented by the general formula "$Li_{7-x-2y}PS_{6-x-y}X_y$". In the general formula, the relationships of "$0 < 7 - x - 2y$", "$0 < 6 - x - y$", "$0 \leq x$" and "$0 \leq y$" are satisfied. "X" may include, for example, at least one selected from the group consisting of fluorine (F), chlorine (Cl), bromine (Br), and iodine (I).

For example, the sulfide solid electrolyte may have a composition represented by the general formula "$Li_{4-x}M_{1-x}P_xS_4$". In the general formula, "x" may be, for example, more than 0, 0.1 or more, 0.2 or more, 0.3 or more, 0.4 or more, 0.5 or more, 0.6 or more, 0.7 or more, 0.8 or more, or 0.9 or more. "x" may be, for example, less than 1, 0.9 or less, 0.8 or less, 0.7 or less, 0.6 or less, 0.5 or less, 0.4 or less, 0.3 or less, 0.2 or less, or 0.1 or less. "M" may include, for example, at least one selected from the group consisting of Al, Zn, In, Ge, Si, Sn, Sb, Ga, and Bi.

For example, the sulfide solid electrolyte may have a composition represented by the general formula "$Li_{10+x}Ge_{1+x}P_{2-x}S_{12}$". In the general formula, "x" may be, for example, 0 or more, 0.1 or more, 0.2 or more, 0.3 or more, 0.4 or more, 0.5 or more, or 0.6 or more. "x" may be, for example, 0.7 or less, 0.6 or less, 0.5 or less, 0.4 or less, 0.3 or less, 0.2 or less, or 0.1 or less. The sulfide solid electrolyte represented by the above general formula may contain, for example, an LGPS crystal phase.

For example, the halide solid electrolyte may have a composition represented by the general formula "$Li_{6-na}M_aX_6$". In the general formula, "n" represents the oxidation number of "M". For example, "M" may include an atom having an oxidation number of +3. For example, "M" may include an atom having an oxidation number of +4. For example, "M" may include at least one selected from the group consisting of Y, Al, Ti, Zr, Ca, and Mg. For example, "$0 < a < 2$" may be satisfied. "X" may include, for example, at least one selected from the group consisting of F, Cl, Br, and I.

For example, the halide solid electrolyte may have a composition represented by the general formula "$Li_{3-a}Ti_aAl_{1-a}F_6$". In the general formula, "a" may be, for example, 0 or more, 0.1 or more, 0.2 or more, 0.3 or more, 0.4 or more, 0.5 or more, 0.6 or more, 0.7 or more, 0.8 or more, or 0.9 or more. "a" may be, for example, 1 or less, 0.9 or less, 0.8 or less, 0.7 or less, 0.6 or less, 0.5 or less, 0.4 or less, 0.3 or less, 0.2 or less, or 0.1 or less.

For example, the halide solid electrolyte may have a composition represented by the general formula "$Li_3Y-Cl_aBr_bI_{6-a-b}$". In the general formula, for example, the relationship of "$0 \leq a + b \leq 6$" may be satisfied. "a" may be, for example, 0 or more, 1 or more, 2 or more, 3 or more, 4 or more, or 5 or more. "a" may be, for example, 6 or less, 5 or less, 4 or less, 3 or less, 2 or less, or 1 or less. "b" may be, for example, 0 or more, 1 or more, 2 or more, 3 or more, 4 or more, or 5 or more. "b" may be, for example, 6 or less, 5 or less, 4 or less, 3 or less, 2 or less, or 1 or less.

For example, the oxide solid electrolyte may contain, for example, at least one selected from the group consisting of $LiNbO_3$, $Li_{1.5}Al_{0.5}Ge_{1.5}(PO_4)_3$, $La_{2/3-x}Li_{3x}TiO_3$, and $Li_7La_3Zr_2O_{12}$. For example, the hydride solid electrolyte may contain $LiBH_4$. For example, the nitride solid electrolyte may contain $Li_3N$ or $Li_3BN_2$.

Production of LMFP

LMFP No. 1 to No. 12 were produced by the following procedures.

Powder materials of manganese carbonate, ferric phosphate, lithium dihydrogen phosphate, and a first dopant source are mixed such that Mn, Fe, P, and the first dopant achieve a desired composition ratio, thereby forming a first mixture. For example, when the first dopant is Si, the first dopant source may be lithium metasilicate. The first mixture is stirred in water to form a slurry. The slurry is spray dried to form a first precursor (powder). The first precursor is fired in a nitrogen atmosphere at 650°C for 5 hours to form a second precursor. The second precursor is pulverized by a planetary ball mill. The second precursor after pulverization, lithium hydroxide, and a second dopant source is mixed to form a second mixture. The second dopant source may be, for example, a hydroxide or carbonate of the second dopant. The second mixture is fired at 1000°C for 5 hours to synthesize LMFP.

In the present process, it is considered that a high melting point element such as Sc or Ti may be introduced into the M site by conducting the second firing at a high temperature of 1000°C. For example, the composition of LMFP No. 4 is "$Li[(Mn_{0.6}Fe_{0.4})_{0.94}Ti_{0.06}][P_{0.94}Si_{0.06}]O_4$".

Evaluation

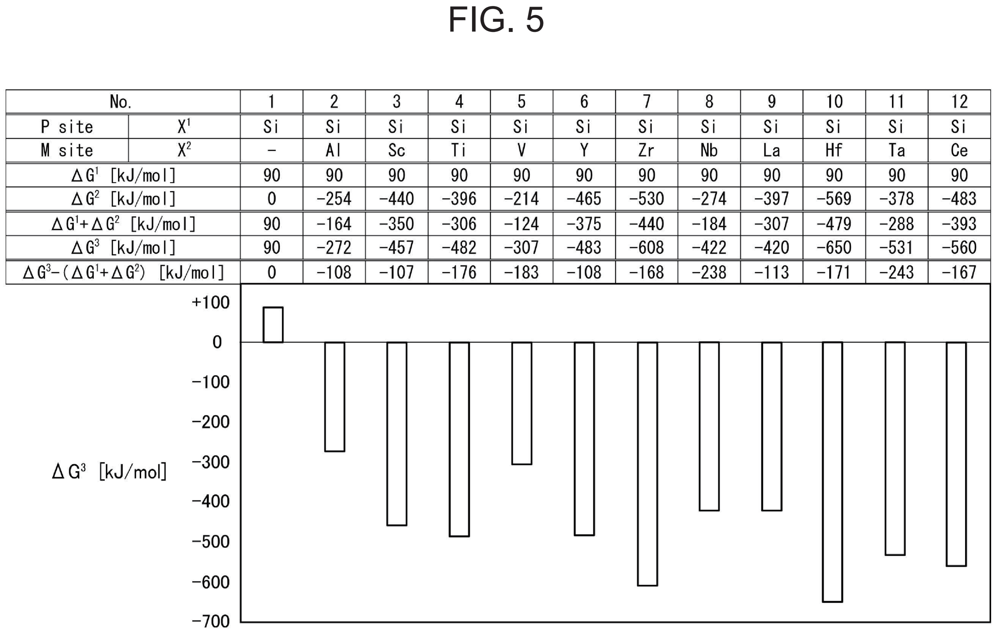

FIG. 5 is the first diagram illustrating the experimental results. In No. 1, the introduction of Si into the P site produces a positive first free energy of formation "$\Delta G^1$". The structure is considered to be instable due to the positive value of the free energy change. As a result, disadvantages such as the precipitation of Si and different phase formation may occur during cycle operation.

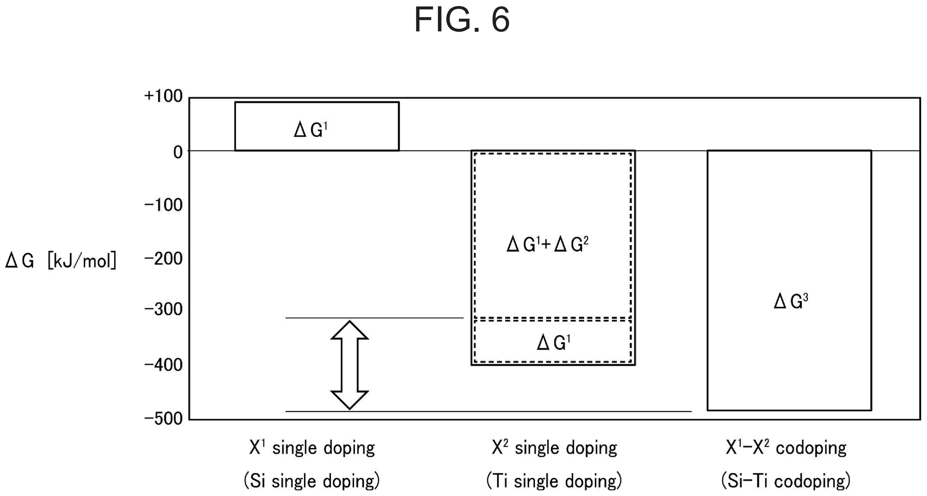

FIG. 6 is the second diagram illustrating the experimental results. As a representative example, No. 4 (Si-Ti co-doping) is described. The introduction of Si alone into the P site produces the first free energy of formation (90 kJ/mol). The doping of Ti alone into the M site produces a negative second free energy of formation (-396 kJ/mol). Based on the doping of Si into the P site and the doping of Ti into the M site, the third free energy of formation is predicted to be the sum of the first free energy of formation and the second free energy of formation (-306 kJ/mol). However, the third free energy of formation produced by the co-doping of Si and Ti is -482 kJ/mol. Since a significant decrease in the free energy change makes Si at the P site stable, the precipitation of Si, different phase formation, and the like are considered to hardly occur during cycle operation.

**Claims**

1. A positive electrode active material comprising olivine lithium manganese iron phosphate, wherein the olivine lithium manganese iron phosphate contains a first dopant at a phosphorus site and a second dopant at a manganese-iron site, and satisfies relationships of:

$$\Delta G^3 < \Delta G^1 + \Delta G^2,$$

$$\Delta G^2 < 0 \text{ kJ/mol},$$

and

$$\Delta G^3 < 0 \text{ kJ/mol}$$

where

$\Delta G^1$ represents free energy of formation produced by substitution of phosphorus at the phosphorus site with the first dopant,
$\Delta G^2$ represents free energy of formation produced by substitution of iron at the manganese-iron site with the second dopant, and
$\Delta G^3$ represents free energy of formation produced by substitution of phosphorus at the phosphorus site with the first dopant and substitution of iron at the manganese-iron site with the second dopant.

2. The positive electrode active material according to claim 1, wherein a relationship of $\Delta G^3 \leq -272$ kJ/mol is further satisfied.

3. The positive electrode active material according to claim 2, wherein a relationship of $\Delta G^3 \leq -457$ kJ/mol is further satisfied.

4. The positive electrode active material according to claim 1, wherein a relationship of $\Delta G^3 - (\Delta G^1 + \Delta G^2) \leq -107$ kJ/mol is further satisfied.

5. The positive electrode active material according to any one of claims 1 to 4, wherein the first dopant contains silicon.

6. The positive electrode active material according to claim 5, wherein the second dopant has a valence of +3, +4, or +5 and a coordination number of 6 at the manganese-iron site.

7. The positive electrode active material according to claim 5, wherein the second dopant contains at least one selected from the group consisting of aluminum, scandium, titanium, vanadium, yttrium, zirconium, niobium, lanthanum, hafnium, tantalum, and cerium.

8. The positive electrode active material according to claim 7, wherein the second dopant is at least one selected from the group consisting of titanium, zirconium, and hafnium.

9. The positive electrode active material according to claim 7, wherein the olivine lithium manganese iron phosphate has a composition represented by a general formula:

$$\text{Li}_{1+a}[(\text{Mn}_x\text{Fe}_{1-x})_{1-y}\text{X}^2_y][\text{P}_{1-z}\text{X}^1_z]\text{O}_4,$$

where $X^1$ represents the first dopant, $X^2$ represents the second dopant, and relationships of $-0.5 \leq a \leq 0.5$, $0.1 \leq x \leq 0.9$, $0.001 \leq y \leq 0.3$, and $0.001 \leq z \leq 0.3$ are satisfied.

10. The positive electrode active material according to claim 9, wherein relationships of $0.5 \leq x \leq 0.9$, $0.005 \leq y \leq 0.2$, and $0.005 \leq z \leq 0.2$ are satisfied.

11. An electrode comprising a positive electrode layer (11), wherein the positive electrode layer (11) contains the positive electrode active material according to any one of claims 1 to 4.

12. A battery (100) comprising the electrode according to claim 11.

13. The battery (100) according to claim 12, wherein the battery (100) has a bipolar structure.

# FIG. 1

Rwp=$az^2$+bz+c

Rwp

Minimum

0.00    0.05    0.10    0.15

z

# FIG. 2

# FIG. 3

# FIG. 4

# FIG. 5

| No. | | 1 | 2 | 3 | 4 | 5 | 6 | 7 | 8 | 9 | 10 | 11 | 12 |
|---|---|---|---|---|---|---|---|---|---|---|---|---|---|
| P site | $X^1$ | Si | Si | Si | Si | Si | Si | Si | Si | Si | Si | Si | Si |
| M site | $X^2$ | − | Al | Sc | Ti | V | Y | Zr | Nb | La | Hf | Ta | Ce |
| $\Delta G^1$ [kJ/mol] | | 90 | 90 | 90 | 90 | 90 | 90 | 90 | 90 | 90 | 90 | 90 | 90 |
| $\Delta G^2$ [kJ/mol] | | 0 | −254 | −440 | −396 | −214 | −465 | −530 | −274 | −397 | −569 | −378 | −483 |
| $\Delta G^1 + \Delta G^2$ [kJ/mol] | | 90 | −164 | −350 | −306 | −124 | −375 | −440 | −184 | −307 | −479 | −288 | −393 |
| $\Delta G^3$ [kJ/mol] | | 90 | −272 | −457 | −482 | −307 | −483 | −608 | −422 | −420 | −650 | −531 | −560 |
| $\Delta G^3 - (\Delta G^1 + \Delta G^2)$ [kJ/mol] | | 0 | −108 | −107 | −176 | −183 | −108 | −168 | −238 | −113 | −171 | −243 | −167 |

EP 4 768 429 A1

EP 4 768 429 A1

## FIG. 6

Europäisches Patentamt

European Patent Office

Office européen des brevets

# EUROPEAN SEARCH REPORT

**Application Number**

EP 25 21 8914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 995 534 A (FOSHAN DYNANONIC TECH CO LTD; QUJING DYNANONIC TECH CO LTD) 21 April 2023 (2023-04-21) * claims 1,10 * * the whole document * | 1-13 | INV. C01B25/45 H01M4/02 H01M4/58 H01M10/052 H01M10/0525 H01M4/136 |
| X | WO 2024/239157 A1 (CONTEMPORARY AMPEREX TECHNOLOGY CO LTD [CN]) 28 November 2024 (2024-11-28) * paragraph [00142]; figure 3 * * the whole document * | 1-13 | |
| X | US 2024/282963 A1 (JIANG YAO [CN] ET AL) 22 August 2024 (2024-08-22) * Table 9 (examples 75, 82-86, 89-90), Table 18 (examples 72 and 75), and Table 1-1 (examples 1-20, 1-21, 1-22, 1-25); figure 5 * * the whole document * | 1-13 | |

**TECHNICAL FIELDS SEARCHED (IPC)**

C01B
H01M

The present search report has been drawn up for all claims

| Place of search | Date of completion of the search | Examiner |
|---|---|---|
| The Hague | 22 May 2026 | Konstantopoulos, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 8914

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2026

| Patent document cited in search report | | Publication date | Patent family member(s) | | Publication date |
|---|---|---|---|---|---|
| CN 115995534 | A | 21-04-2023 | NONE | | |
| WO 2024239157 | A1 | 28-11-2024 | CN | 119998956 A | 13-05-2025 |
| | | | WO | 2024239157 A1 | 28-11-2024 |
| US 2024282963 | A1 | 22-08-2024 | AU | 2022371736 A1 | 03-08-2023 |
| | | | CN | 116547835 A | 04-08-2023 |
| | | | CN | 117121236 A | 24-11-2023 |
| | | | CN | 119542374 A | 28-02-2025 |
| | | | EP | 4261946 A1 | 18-10-2023 |
| | | | EP | 4418362 A1 | 21-08-2024 |
| | | | JP | 2024505446 A | 06-02-2024 |
| | | | JP | 2024533449 A | 12-09-2024 |
| | | | KR | 20230122108 A | 22-08-2023 |
| | | | KR | 20240048003 A | 12-04-2024 |
| | | | US | 2023361296 A1 | 09-11-2023 |
| | | | US | 2024282963 A1 | 22-08-2024 |
| | | | WO | 2023066386 A1 | 27-04-2023 |
| | | | WO | 2023066393 A1 | 27-04-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023039365 A